# EUROPEAN PATENT APPLICATION

(11) **EP 4 567 913 A2**
(43) Date of publication of application: **11.06.2025**
(21) Application number: 24217606.3
(22) Date of filing: 04.12.2024
(51) Int. Cl.: H01M 4/04, H01M 4/133, H01M 4/36, H01M 4/58, H01M 4/587, H01M 10/0525, H01M 10/056, H01M 4/02

(54) **BATTERY CORE, BATTERY CORE PREPARATION METHOD, STARTING BATTERY FOR FUEL ENGINE, AND VEHICLE**

(30) Priority: 05.12.2023 CN 202311660714
(71) Applicant: BYD Company Limited, Shenzhen, Guangdong 518118 (CN)
(72) Inventor: SUO, Lulu, Shenzhen, 518118 (CN); YAO, Bin, Shenzhen, 518118 (CN); LUO, Xiang, Shenzhen, 518118 (CN); LIU, Guanghui, Shenzhen, 518118 (CN); WANG, Xiafen, Shenzhen, 518118 (CN)
(74) Representative: Taor, Simon Edward William

(57) **Abstract**

The present disclosure discloses a battery core, a battery core preparation method, a starting battery for a fuel engine, and a vehicle. The battery core provided by the present disclosure includes a positive electrode and a negative electrode. The positive electrode includes composite lithium iron phosphate particles, and the composite lithium iron phosphate particles include at least two types of lithium iron phosphate particles having different D₅₀ particle diameters. The negative electrode includes composite graphite particles, and the composite graphite particles include at least two types of graphite particles having different D₅₀ particle diameters.

## Description

### FIELD

The present disclosure relates to the field of lithium-ion batteries, and specifically to a battery core, a battery core preparation method, a starting battery for a fuel engine, and a vehicle.

### BACKGROUND

The normal operating temperature of a lithium iron phosphate battery is in a range from 0°C to 60°C. The battery capacity begins to decline sharply to about 50% at temperature of -10°C, and almost only from 20% to 40% of the capacity remains, at temperature of -20°C. When the temperature exceeds 60°C, the side reaction between lithium ions and the electrolyte solution intensifies, resulting in a capacity decline.

In view of the problem that lithium iron phosphate has limited applications due to its poor low-temperature performance, a currently commonly used method is to improve the low-temperature performance from the electrode level, such as shortening the Li⁺ transmission path and reducing impedance by increasing the amount of conductive agent and reducing the area density.

Related technologies often fail to take into account the high-rate discharge performance at low-temperature and high-temperature cycle performance required by starting batteries.

Therefore, there is an urgent need for a lithium iron phosphate battery having both excellent high-rate discharge performance at low-temperature and high-temperature cycle performance and a preparation process thereof.

### SUMMARY

An objective of the present disclosure is to overcome the problem that lithium iron phosphate batteries in the prior art cannot have both excellent high-rate discharge performance at low-temperature and excellent high-temperature cycle performance, and to provide a battery core, a battery core preparation method, a starting battery for a fuel engine, and a vehicle.

To achieve the above objectives, a first aspect of the present disclosure provides a battery core, including a positive electrode and a negative electrode,

the positive electrode including composite lithium iron phosphate particles, the composite lithium iron phosphate particles including at least two types of lithium iron phosphate particles having different D₅₀ particle diameters; and

the negative electrode including composite graphite particles, the composite graphite particles including at least two types of graphite particles having different D₅₀ particle diameters.

In some embodiments, an orientation index (OI) value of the composite graphite particles is less than or equal to 7.

In some embodiments, the negative electrode further comprises hard carbon.

In some embodiments, a D₅₀ particle diameter of the hard carbon is in a range from 3 µm to 10 µm.

In some embodiments, a weight ratio of the composite graphite particles to the hard carbon is (85-95):(5-15).

In some embodiments, the composite graphite particles comprise graphite particles A and graphite particles B, wherein a D₅₀ particle diameter of the graphite particles A is in a range from 5 µm to 7 µm, and a D₅₀ particle diameter of the graphite particles B is in a range from 9 µm to 11 µm.

In some embodiments, contents of the graphite particles A and the graphite particles B in the composite graphite particles are in a range from 25 wt% to 75 wt% and in a range from 25 wt% to 75 wt%, respectively, based on the total weight of the composite graphite particles.

In some embodiments, the composite lithium iron phosphate particles comprise at least two of lithium iron phosphate particles A, lithium iron phosphate particles B, lithium iron phosphate particles C, and lithium iron phosphate particles D, wherein D₅₀ particle diameters of the lithium iron phosphate particles A, the lithium iron phosphate particles B, the lithium iron phosphate particles C, and the lithium iron phosphate particles D are in a range from 1 µm to 3 µm, in a range from 5 µm to 7 µm, in a range from 9 µm to 11 µm, and in a range from 18 µm to 20 µm, respectively.

In some embodiments, the total content of the lithium iron phosphate particles A and the lithium iron phosphate particles B is less than or equal to 75 wt% based on the total weight of the composite lithium iron phosphate particles.

In some embodiments, the composite lithium iron phosphate particles are a mixture of the lithium iron phosphate particles A, the lithium iron phosphate particles B, and the lithium iron phosphate particles C. In some embodiments, the contents of the lithium iron phosphate particles A, the lithium iron phosphate particles B, and the lithium iron phosphate particles C in the composite lithium iron phosphate particles are in a range from 10 wt% to 30 wt%, in a range from 20 wt% to 40 wt%, and in a range from 30 wt% to 70 wt%, respectively, based on the total weight of the composite lithium iron phosphate particles.

In some embodiments, the battery core further comprising an electrolyte solution containing a lithium salt.

In some embodiments, the lithium salt comprises lithium hexafluorophosphate and further comprises at least one selected from lithium bis(fluorosulfonyl)imide, lithium bis(trifluoromethanesulphonyl)imide, lithium bis(oxalato)borate, and lithium difluoro(oxalato)borate.

In some embodiments, the lithium salt is a mixture of lithium hexafluorophosphate, lithium bis(fluorosulfonyl)imide, and lithium difluoro(oxalato)borate.

In some embodiments, the weight ratio of lithium hexafluorophosphate, lithium bis(fluorosulfonyl)imide, and lithium difluoro(oxalato)borate in the lithium salt is (5-10):(2-5):(0.5-1).

In some embodiments, the content of the lithium salt in the electrolyte solution is in a range from 0.8 mol/L to 1.2 mol/L.

In some embodiments, the battery core according further comprising an electrolyte solution containing an additive, wherein the additive is at least one selected from vinylene carbonate, fluoroethylene carbonate, and ethylene sulfate.

In some embodiments, the additive is a mixture of vinylene carbonate and fluoroethylene carbonate.

In some embodiments, the content of the additive in the electrolyte solution is in a range from 1.5 mol/L to 5 mol/L.

In some embodiments, the weight ratio of vinylene carbonate and fluoroethylene carbonate in the additive is (1.5-3.5):(2-5).

In some embodiments, the battery core further comprising an electrolyte solution containing a solvent, wherein the solvent is at least one selected from ethylene carbonate, diethyl carbonate, ethyl methyl carbonate, and dimethyl carbonate.

In some embodiments, the solvent is a mixture of ethylene carbonate, dimethyl carbonate, and ethyl methyl carbonate.

In some embodiments, the weight ratio of ethylene carbonate, dimethyl carbonate, and ethyl methyl carbonate in the solvent is (2-4):(2-4):(3-5).

In some embodiments, the positive electrode comprises a positive electrode current collector and a positive electrode material layer on the positive electrode current collector, wherein the content of the composite lithium iron phosphate particles in the positive electrode material layer is in a range from 90 wt% to 94 wt% based on the total weight of the positive electrode material layer.

In some embodiments, the negative electrode comprises a negative electrode current collector and a negative electrode material layer on the negative electrode current collector, wherein the total content of the composite graphite particles and the hard carbon in the negative electrode material layer is in a range from 90 wt% to 95 wt% based on the total weight of the negative electrode material layer.

In some embodiments, the content of the hard carbon is less than or equal to 15 wt% based on the total weight of the composite graphite particles and the hard carbon.

A second aspect of the present disclosure provides a battery core preparation method, including:
providing a positive electrode, the positive electrode including composite lithium iron phosphate particles, the composite lithium iron phosphate particles including at least two types of lithium iron phosphate particles having different D₅₀ particle diameters;
providing a negative electrode, the negative electrode including composite graphite particles, the composite graphite particles including at least two types of graphite particles having different D₅₀ particle diameters; and
assembling the positive electrode and the negative electrode into a battery core.

In some embodiments, a method for preparing the positive electrode comprises: mixing at least two types of lithium iron phosphate particles having different D₅₀ particle diameters to obtain the composite lithium iron phosphate particles; and mixing the composite lithium iron phosphate particles, a first conductive agent, a first binder, and a first solvent to obtain a positive electrode slurry, and then applying the positive electrode slurry to a surface of a positive electrode current collector, followed by rolling to obtain the positive electrode.

In some embodiments, a method for preparing the negative electrode comprises: mixing at least two types of graphite particles having different D₅₀ particle diameters to obtain the composite graphite particles; and mixing the composite graphite particles, hard carbon, a second conductive agent, a second binder, and a second solvent to obtain a negative electrode slurry, and then applying the negative electrode slurry to a surface of a negative electrode current collector, followed by rolling to obtain the negative electrode.

A third aspect of the present disclosure provides a starting battery for a fuel engine, including the battery core according to the present disclosure or a battery core prepared by the method according to the present disclosure.

A fourth aspect of the present disclosure provides a vehicle, including the battery core according to the present disclosure, a battery core prepared by the method according to the present disclosure, or a starting battery for a fuel engine according to the present disclosure.

Through the above technical solutions, the present disclosure has the following beneficial effects.

In the present disclosure, at least two types of lithium iron phosphate particles having different D₅₀ particle diameters are mixed to obtain composite lithium iron phosphate particles as a active material of the positive electrode, and at least two types of graphite particles having different D₅₀ particle diameters are mixed to serve as a active material of the negative electrode. In this way, the tortuosity of positive and negative electrodes can be reduced, and the lithium ion transmission path can be shortened to reduce the lithium ion migration impedance, so that the prepared lithium iron phosphate battery can have both excellent high-rate discharge performance at low-temperature and excellent high-temperature cycle performance.

In a preferred embodiment of the present disclosure, the high-rate discharge performance at low-temperature and the high-temperature performance of the battery can be further improved by adjusting the particle diameters of the lithium iron phosphate particles, the mixing ratio of the lithium iron phosphate particles with different particle diameters, the particle diameters of the graphite particles, the mixing ratio of the graphite particles with different particle diameters, an orientation index (OI) value of the graphite particles, the types and proportions of the lithium salt and the additive in the electrolyte solution. The low-temperature cold start ability of the prepared lithium iron phosphate battery is much higher than that of a conventional lithium iron phosphate battery, when the prepared lithium iron phosphate battery is discharged at 5C for 2s at -30°C and 50% state of charge (SOC) at the end of life (deteriorated to 80% state of health (SOH)), the cut-off voltage can reach 2.62 V In addition, according to requirements of fuel engines for starting batteries, the life of the prepared lithium iron phosphate battery can reach eight years, which is usually the warranty period of the entire vehicle, i.e., the capacity retention rate of the prepared lithium iron phosphate battery will be greater than or equal to 80% after eight years.

### BRIEF DESCRIPTION OF THE DRAWINGS

FIG. 1 is a curve of cold-start discharge of a soft-pack lithium iron phosphate battery prepared in Example 1 of the present disclosure at -30°C;
FIG. 2 is a curve showing a capacity retention rate of a soft-pack lithium iron phosphate battery prepared in Example 1 of the present disclosure after 1000 cycles at 60°C;
FIG. 3 is a schematic diagram of a starting battery for a fuel engine according to embodiments of the present disclosure;
FIG. 4 is a schematic diagram of a vehicle according to embodiments of the present disclosure; and
FIG. 5 is another schematic diagram of a vehicle according to embodiments of the present disclosure.

Reference numerals in the drawings of the specification are as follows:
100. Vehicle; 2. Starting battery for a fuel engine; 1. battery core.

### DETAILED DESCRIPTION

The endpoints of the ranges and any values disclosed herein are not limited to the precise ranges or values, and these ranges or values should be construed as including values close to these ranges or values. For numerical ranges, endpoint values of each range may be combined, an endpoint value of each range and an individual point value may be combined, and individual point values may be combined, to obtain one or more new numerical ranges, which are to be construed as being specifically disclosed herein.

A first aspect of the present disclosure provides a battery core, including a positive electrode and a negative electrode,
the positive electrode including composite lithium iron phosphate particles, the composite lithium iron phosphate particles including at least two types of lithium iron phosphate particles having different D₅₀ particle diameters; and
the negative electrode including composite graphite particles, the composite graphite particles including at least two types of graphite particles having different D₅₀ particle diameters.

In the present disclosure, at least two types of lithium iron phosphate particles having different particle diameters are mixed to serve as the active material of the positive electrode, and at least two types of graphite particles having different particle diameters are mixed to serve as the active material of the negative electrode. In this way, the tortuosity of positive and negative electrodes can be reduced, and the lithium ion transmission path can be shortened to reduce the lithium ion migration impedance, so that the prepared lithium iron phosphate battery can have both excellent high-rate discharge performance at low-temperature and a long high-temperature cycle life.

Specifically, in the present disclosure, D₅₀ may be understood as Dₙ₅₀.

In some implementations, an OI value of the composite graphite particles is less than or equal to 7. The OI value represents the degree of isotropic distribution of graphite particles. The smaller the OI value, the more likely graphite tends to be distributed perpendicularly to the current collector, and the higher isotropy is, which is beneficial to low-temperature performance and rate performance. The use of the composite graphite particles having an OI value less than or equal to 7 can shorten the diffusion path of lithium ions and increase the migration rate of lithium ions, thereby improving the low-temperature and high-rate discharge performance of the prepared lithium iron phosphate battery. The peak intensity (I₁₁₀) of the (110) plane and the peak intensity (I₀₀₄) of the (004) plane can be obtained by measuring the crystal of graphite by X-ray diffraction (XRD). The OI value refers to the ratio of I₀₀₄/I₁₁₀.

In some implementations, the negative electrode further includes hard carbon.

In the present disclosure, D₅₀ refers to the particle size when the cumulative particle size distribution percentage of the sample reaches 50%.

To obtain the particle size D₅₀ of lithium replenishment agent, any known method may be used. In the examples discussed in relation to embodiments of the invention, the D₅₀ measurement was carried out by using a laser particle size analyzer, and the specific operation was as follows:
1. Sample preparation: The electrode sheet was washed with the solvent dimethyl carbonate (DMC), and then dried. The lithium replenishment layer was removed by scraping and ultrasonic treatment. Then the lithium replenishment layer was immersed in an organic solvent such as N-Methylpyrrolidone (NMP) to remove the binder. The conductive agent was separated from the lithium replenishment agent by centrifugation, and the delithiated lithium replenishment agent as particles was obtained after repeatedly washing and drying.
2. Sample dispersion: The lithium replenishment agent as particles were added into a dispersing medium, and the sample was fully dispersed by mechanical stirring, ultrasonic shaking at a high frequency and other means to avoid the particle agglomeration.
3. Measurement: The dispersed lithium replenishment agent as particles was introduced into a measurement system. The laser particle size analyzer was used to emit a laser beam to penetrate through the sample, and diffraction occurred when the laser travelled through the sample.
4. Data collection and analysis: The instrument collectted the data of light intensity scattered from various angles, and then calculated the particle size distribution by built-in software according to the Mie theory or other applicable light scattering theories.
5. Result output: After the test, the instrument can provide data such as particle size distribution data table, distribution curve, specific surface area, D₁₀, D₅₀ and D₉₀.

In some implementations, a D₅₀ particle diameter of the hard carbon is in a range from 3 µm to 10 µm. Hard carbon has a high degree of disorder, many lithium intercalation directions, and small diffusion resistance, and therefore is suitable for high-current discharge. However, the electrical conductivity of hard carbon is relatively poor. When the D₅₀ particle diameter of hard carbon meets this range, power performance and high-temperature performance can be balanced. When the D₅₀ particle diameter of hard carbon meets this range, the ion solid-phase diffusion impedance and side reactions with the electrolyte solution can be regulated. Specifically, the D₅₀ particle diameter of the hard carbon may be 3 µm, 4 µm, 5 µm, 6 µm, 7 µm, 8 µm, 9 µm, 10 µm, or any value in the range between any two of the above numerical values.

In some implementations, a weight ratio of the composite graphite particles to the hard carbon is (85-95):(5-15). Specifically, the weight ratio of the composite graphite particles to the hard carbon may be, for example, 85:15, 90:15, or 95:15.

By adjusting the combination of graphite particles with different particle sizes in the composite graphite particles and the ratio of the composite graphite particles to the hard carbon, the active material of the positive electrode and the active material of the negative electrode can have a synergistic effect, so that the prepared lithium iron phosphate battery can have more excellent high-rate discharge performance at low-temperature and high-temperature cycle performance.

In some implementations, the composite graphite particles include graphite particles A and graphite particles B. Preferably, the composite graphite particles are a mixture of the graphite particles A and the graphite particles B, where D₅₀ particle diameters of the graphite particles A and the graphite particles B are in a range from 5 µm to 7 µm and in a range from 9µm to 11 µm, respectively.

The graphite particles A and the graphite particles B respectively having D₅₀ particle diameters of in a range from 5 µm to 7 µm and in a range from 9 µm to 11 µm are compounded with the hard carbon. The slightly larger interlayer spacing of the hard carbon facilitates the intercalation and deintercalation of lithium ions, thereby improving the low-temperature rate performance and power performance of the lithium iron phosphate battery (generally, good rate performance indicates good power performance). In addition, the compounding of the graphite particles having D₅₀ particle diameters of in a range from 5 µm to 7 µm and in a range from 9 µm to 11 µm can suppress the side reactions between the electrolyte solution and an active material of the negative electrode at high temperature, thereby achieving good high-temperature cycle performance.

In some implementations, the contents of the graphite particles A and the graphite particles B in the composite graphite particles are in a range from 25 wt% to 75 wt% and in a range from 25 wt% to 75 wt%, respectively, based on the total weight of the composite graphite particles.

In some implementations, the composite lithium iron phosphate particles include at least two of lithium iron phosphate particles A, lithium iron phosphate particles B, lithium iron phosphate particles C, and lithium iron phosphate particles D, where D₅₀ particle diameters of the lithium iron phosphate particles A, the lithium iron phosphate particles B, the lithium iron phosphate particles C, and the lithium iron phosphate particles D are in a range from 1 µm to 3 µm, in a range from 5 µm to 7 µm, in a range from 9 µm to 11 µm, and in a range from 18 µm to 20 µm, respectively.

In some implementations, the composite lithium iron phosphate particles include lithium iron phosphate particles A and lithium iron phosphate particles B, and further include lithium iron phosphate particles C and/or lithium iron phosphate particles D. Preferably, the total content of the lithium iron phosphate particles A and the lithium iron phosphate particles B is less than or equal to 75 wt% based on the total weight of the composite lithium iron phosphate particles.

In some implementations, the composite lithium iron phosphate particles are a mixture of the lithium iron phosphate particles A, the lithium iron phosphate particles B, and the lithium iron phosphate particles C. With the use of the mixture of the lithium iron phosphate particles A, the lithium iron phosphate particles B, and the lithium iron phosphate particles C respectively having D₅₀ particle diameters of in a range from 1 µm to 3 µm, in a range from 5 µm to 7 µm, and in a range from 9 µm to 11 µm as the active material of the positive electrode, particles of different sizes accumulate in a certain space to construct a multi-dimensional porous structure.

In some implementations, the contents of the lithium iron phosphate particles A, the lithium iron phosphate particles B, and the lithium iron phosphate particles C in the composite lithium iron phosphate particles are in a range from 10 wt% to 30 wt%, in a range from 20 wt% to 40 wt%, and in a range from 30 wt% to 70 wt%, respectively, based on the total weight of the composite lithium iron phosphate particles.

By adjusting the combination and the mixing ratio of lithium iron phosphate particles having different particle diameters in the composite lithium iron phosphate particles, the porosity and tortuosity of the positive electrode can be adjusted to facilitate the diffusion of lithium ions, thereby further improving the high-rate discharge performance at low-temperature and high-temperature cycle performance of the prepared lithium iron phosphate battery.

In some implementations, the positive electrode has a double-sided density of in a range from 200 g/m² to 250 g/m² and a compaction density of in a range from 1.8 g/cm³ to 3 g/cm³.

Specifically, the double-sided density of the positive electrode may be understood as a sum of area densities of two surfaces of the positive electrode material layer in a thickness direction of the positive electrode. For example, the area density of one surface of the positive electrode material layer in the thickness direction of the positive electrode is 100 g/m², the area density of the other surface of the positive electrode material layer in the thickness direction of the positive electrode is 100 g/m², and the double-sided density of the positive electrode is 200 g/m².

In some implementations, the negative electrode has a double-sided density of in a range from 80 g/m² to 110 g/m² and a compaction density of in a range from 1 g/cm³ to 2 g/cm³.

Specifically, the double-sided density of the negative electrode may be understood as a sum of area densities of two surfaces of the negative electrode material layer in a thickness direction of the negative electrode. For example, the area density of one surface of the negative electrode material layer in the thickness direction of the negative electrode is 50 g/m², the area density of the other surface of the negative electrode material layer in the thickness direction of the negative electrode is 50 g/m², and the double-sided density of the negative electrode is 100 g/m2.

In some implementations, the battery core further includes an electrolyte solution containing a lithium salt.

In some implementations, a filling coefficient of the electrolyte solution in the battery core is in a range from 3.8 g/Ah to 6 g/Ah.

In some implementations, the lithium salt includes lithium hexafluorophosphate and further includes at least one selected from lithium bis(fluorosulfonyl)imide, lithium bis(trifluoromethanesulphonyl)imide, lithium bis(oxalato)borate, and lithium difluoro(oxalato)borate. Preferably, the lithium salt is a mixture of lithium hexafluorophosphate, lithium bis(fluorosulfonyl)imide, and lithium difluoro(oxalato)borate.

In some implementations, the weight ratio of lithium hexafluorophosphate, lithium bis(fluorosulfonyl)imide, and lithium difluoro(oxalato)borate in the lithium salt is (5-10):(2-5):(0.5-1).

By selecting an appropriate type and proportion of the lithium salt, the solid electrolyte interface (SEI) impedance of the prepared lithium iron phosphate battery can be reduced to suppress high-temperature side reactions, thereby achieving good high-temperature performance and low-temperature performance.

In some implementations, the content of the lithium salt in the electrolyte solution is in a range from 0.8 mol/L to 1.2 mol/L.

In some implementations, the electrolyte solution further contains an additive, where the additive is at least one selected from vinylene carbonate (VC), fluoroethylene carbonate (FEC), and ethylene sulfate (DTD). Preferably, the additive is a mixture of vinylene carbonate and fluoroethylene carbonate.

In some implementations, the content of the additive in the electrolyte solution is in a range from 1.5 mol/L to 5 mol/L.

In some implementations, the weight ratio of vinylene carbonate and fluoroethylene carbonate in the additive is (1.5-3.5):(2-5).

By selecting an appropriate type and proportion of the additive in the electrolyte solution, the high-temperature performance of the prepared lithium iron phosphate battery can be further improved, thereby achieving good high-rate discharge performance at low-temperature and high-temperature life performance.

In some implementations, the electrolyte solution further contains a solvent, where the solvent is at least one selected from ethylene carbonate, diethyl carbonate, ethyl methyl carbonate, and dimethyl carbonate. Preferably, the solvent is a mixture of ethylene carbonate, dimethyl carbonate, and ethyl methyl carbonate.

In some implementations, the weight ratio of ethylene carbonate, dimethyl carbonate, and ethyl methyl carbonate in the solvent is (2-4):(2-4):(3-5).

In some implementations, the positive electrode includes a positive electrode current collector and a positive electrode material layer on the positive electrode current collector, where the content of the composite lithium iron phosphate particles in the positive electrode material layer is in a range from 90 wt% to 94 wt% based on the total weight of the positive electrode material layer.

In some implementations, the negative electrode includes a negative electrode current collector and a negative electrode material layer on the negative electrode current collector, where the total content of the composite graphite particles and the hard carbon in the negative electrode material layer is in a range from 90 wt% to 95 wt% based on the total weight of the negative electrode material layer.

In some implementations, the content of the hard carbon in the negative electrode material layer is less than or equal to 15 wt% based on the total weight of the negative electrode material layer.

In some implementations, the battery core further includes a separator.

In the present disclosure, the type of the separator is not particularly limited, and a conventional separator in the art such as a polypropylene-polyethylene-polypropylene (PP/PE/PP) separator. Preferably, the porosity of the separator is 45% or less.

In some implementations, the thickness of the separator is in a range from 9 µm to 25 µm.

A second aspect of the present disclosure provides a battery core preparation method, including:
providing a positive electrode, the positive electrode including composite lithium iron phosphate particles, the composite lithium iron phosphate particles including at least two types of lithium iron phosphate particles having different D₅₀ particle diameters;
providing a negative electrode, the negative electrode including composite graphite particles, the composite graphite particles including at least two types of graphite particles having different D₅₀ particle diameters; and
assembling the positive electrode and the negative electrode into a battery core.

It can be understood that although only the assembly of the positive electrode and the negative electrode into the battery core is described in the above method, it does not mean that the battery core includes only the positive electrode and the negative electrode. The battery core may further include other known components such as a separator, an electrolyte solution, and/or a solid electrolyte, etc.

In some implementations, the battery core preparation method includes: winding a positive electrode, a negative electrode, and a separator into an electrode group, followed by injection of an electrolyte solution to obtain the battery core, where
the positive electrode includes composite lithium iron phosphate particles, and the composite lithium iron phosphate particles include at least two types of lithium iron phosphate particles having different D₅₀ particle diameters; and
the negative electrode includes composite graphite particles, and the composite graphite particles include at least two types of graphite particles having different D₅₀ particle diameters.

In the battery core preparation method of the second aspect of the present disclosure, the types and amounts of the positive electrode, the negative electrode, the separator, and the electrolyte solution are all the same as those in the battery core of the first aspect of the present disclosure, and will not be described in detail in the second aspect of the present disclosure to avoid repetition, but those skilled in the art should not construe it as limiting the present disclosure.

In some implementations, the negative electrode further includes hard carbon.

In some implementations, the positive electrode is obtained by coating a positive electrode slurry obtained by mixing a positive electrode powder and a first solvent on a surface of a positive electrode current collector. The content of the composite lithium iron phosphate particles is in a range from 90 wt% to 94 wt% based on the total weight of the positive electrode powder. When the content of the composite lithium iron phosphate particles satisfies this range, a sufficient battery energy density can be provided.

In some implementations, the negative electrode is obtained by coating a negative electrode slurry obtained by mixing a negative electrode powder and a second solvent on a surface of a negative electrode current collector. The total content of the composite graphite particles and the hard carbon is in a range from 90 wt% to 95 wt% based on the total weight of the negative electrode powder. The content of the hard carbon is less than or equal to 15 wt% based on the total weight of the composite graphite particles and the hard carbon. When the total content of the composite graphite particles and the hard carbon satisfies this range, high-rate performance of the battery can be provided.

Further, the content of the hard carbon isin a range from 8 wt% to 12 wt% based on the total weight of the composite graphite particles and the hard carbon.

In the present disclosure, the positive electrode powder includes composite lithium iron phosphate particles, a first conductive agent, and a first binder. The negative electrode powder includes composite graphite particles, hard carbon, a second conductive agent, and a second binder.

In some implementations, a method for preparing the positive electrode includes: mixing at least two types of lithium iron phosphate particles having different D₅₀ particle diameters to obtain the composite lithium iron phosphate particles; and mixing the composite lithium iron phosphate particles, a first conductive agent, and a first binder, and a first solvent to obtain a positive electrode slurry, and then applying the positive electrode slurry to a surface of a positive electrode current collector, followed by rolling to obtain the positive electrode.

Preferably, a method for preparing the negative electrode includes: mixing at least two types of graphite particles having different D₅₀ particle diameters to obtain the composite graphite particles; and mixing the composite graphite particles, hard carbon, a second conductive agent, and a second binder, and a second solvent to obtain a negative electrode slurry, and then applying the negative electrode slurry to a surface of a negative electrode current collector, followed by rolling to obtain the negative electrode.

In some implementations, the content of the first conductive agent is less than or equal to 5 wt%, preferably in a range from 3 wt% to 5 wt%, based on the total weight of the positive electrode powder; and the content of the first binder is less than or equal to 5 wt%, preferably in a range from 3 wt% to 5 wt%. When the contents of the first conductive agent and the first binder satisfy these ranges, the electronic conductivity of the positive electrode can be enhanced to reduce the charge transfer impedance while ensuring certain manufacturability of the positive electrode, thereby improving the rate performance and the power performance of the battery.

In some implementations, the first conductive agent is at least one selected from carbon black (SP), carbon nanotubes (CNTs), graphene, Ketjen black, and carbon nanofibers, and is preferably a mixture of carbon black and carbon nanotubes. The mixture of carbon black and carbon nanotubes is used as the conductive agent of the positive electrode, which can have a synergistic effect with the composite lithium iron phosphate particles to provide a multi-dimensional conductive network of points and lines, thereby enhancing electronic conductivity and improving the low-temperature performance of the battery.

In some implementations, in the first conductive agent, the content of the carbon black is in a range from 1 wt% to 3 wt%, and the content of the carbon nanotubes is in a range from 1.5 wt% to 3 wt% based on the total weight of the positive electrode powder.

In some implementations, the first binder is selected from polyvinylidene fluoride (PVDF) and/or polytetrafluoroethylene (PTFE), and is preferably polyvinylidene fluoride.

Further, the first binder is selected from polyvinylidene fluoride having a weight average molecular weight of from 1,000,000 g/mol to 1,200,000 g/mol.

In some implementations, the amount of the first solvent is in a range from 0.5 mL per 1 g of the positive electrode powder to 1 mL per 1 g of the positive electrode powder.

In some implementations, the first solvent is N-methylpyrrolidone (NMP).

In some implementations, the content of the second conductive agent is less than or equal to 5 wt%, and the content of the second binder is less than or equal 5 wt%, based on the total weight of the negative electrode powder. When the contents of the second conductive agent and the second binder satisfy these ranges, the electronic conductivity of the negative electrode can be enhanced to reduce the charge transfer impedance while ensuring certain manufacturability of the negative electrode, thereby improving the rate performance and the power performance of the battery.

In some implementations, the second conductive agent is at least one selected from carbon black (SP), carbon nanotubes (CNTs), graphene, Ketjen black, and carbon nanofibers, and is preferably carbon black. The use of carbon black as the conductive agent of the negative electrode can achieve an optimal balance between costs and electrical conductivity.

In some implementations, the second binder is one or two selected from sodium carboxymethyl cellulose (CMC), styrene butadiene rubber (SBR), and polyacrylic acid (PAA), and is preferably a mixture of sodium carboxymethyl cellulose and styrene butadiene rubber, more preferably a mixture of sodium carboxymethyl cellulose having a weight average molecular weight of 300,000 g/mol to 500,000 g/mol and styrene butadiene rubber.

Further, the weight ratio of sodium carboxymethyl cellulose and styrene butadiene rubber in the second binder is (1-3):(2-4). By using the mixture of sodium carboxymethyl cellulose and styrene butadiene rubber in this weight ratio as the binder of the negative electrode, the powder material can be uniformly adhered together and can be firmly adhered to the current collector.

In some implementations, the amount of the second solvent is in a rang from 0.8 mL per 1 g of the negative electrode powder to 1.2 mL per 1 g of the negative electrode powder.

In some implementations, the second solvent is water.

According to a preferred implementation of the present disclosure, the battery core preparation method includes the following steps.

S1. Preparation of positive electrode: Based on the total weight of a positive electrode powder, in a range from 90 wt% to 94 wt% of composite lithium iron phosphate particles, in a range from 3 wt% to 5 wt% of a first conductive agent and in a range from 3 wt% to 5 wt% of a first binder are weighed in percentages by weight to obtain the positive electrode powder, followed by addition of a first solvent (where the amount of the first solvent is in a range from 0.5 mL per 1 g of the positive electrode powder to 1 mL per 1 g of the positive electrode powder) and mixing by a vacuum stirrer to obtain a positive electrode slurry, which is coated and rolled to obtain a positive electrode having a double-sided density of in a range from 200 g/m² to 250 g/m² and a compaction density of in a range from 1.8 g/cm³ to 3 g/cm³. The composite lithium iron phosphate particles are a mixture of lithium iron phosphate particles A, lithium iron phosphate particles B, and lithium iron phosphate particles C respectively having D₅₀ particle diameters of in a range from 1 µm to 3 µm, in a range from 5 µm to 7 µm, and in a range from 9 µm to 11 µm.

The contents of the lithium iron phosphate particles A, the lithium iron phosphate particles B, and the lithium iron phosphate particles C in the composite lithium iron phosphate particles are in a range from 10 wt% to 30 wt%, in a range from 20 wt% to 40 wt%, and in a range from 30 wt% to 70 wt%, respectively, based on the total weight of the composite lithium iron phosphate particles.

S2. Preparation of negative electrode: Based on the total weight of a negative electrode powder, in a range from 90 wt% to 95 wt% of a mixture of composite graphite particles and hard carbon (where the content of the hard carbon is less than or equal to 15 wt% based on the total weight of the mixture of composite graphite particles and hard carbon, and the D₅₀ particle diameter of the hard carbon is in a range from 3 µm to 10 µm ), less than or equal to 5 wt% of a second conductive agent, and less than or equal to 5 wt% of a second binder are weighed in percentages by weight to obtain a negative electrode powder, followed by addition of a second solvent (where the amount of the second solvent is 0.8-1.2 mL per 1 g of the positive electrode powder) and mixing by a vacuum stirrer to obtain a negative electrode slurry, which is coated and rolled to obtain a negative electrode having a double-sided density of in a range from 80 g/m² to 110 g/m² and a compaction density of in a range from 1 g/cm³ to 2 g/cm³. The composite graphite particles are a mixture of graphite particle A and graphite particle B respectively having D₅₀ particle diameters of in a range from 5 µm to 7 µm and in a range from 9 µm to 11 µm.

OI values of the graphite particles A and the graphite particles B are less than or equal to 7. The contents of the graphite particles A and the graphite particles B are in a range from 25 wt% to 75 wt% and in a range from 25 wt% to 75 wt%, respectively, based on the total weight of the composite graphite particles.

S3. Preparation of electrolyte solution: Based on the total weight of the electrolyte solution, in a range from 0.8 mol/L to 1.2 mol/L of a lithium salt, in a range from 1.5 mol/L to 5 mol/L of an additive, and a solvent 3 are weighed and mixed. The lithium salt is a mixture of lithium hexafluorophosphate, lithium bis(fluorosulfonyl)imide, and lithium difluoro(oxalato)borate at a weight ratio of (5-10):(2-5):(0.5-1). The additive is a mixture of vinylene carbonate and fluoroethylene carbonate at a weight ratio of (1.5-3.5):(2-5). The solvent 3 is a mixture of ethylene carbonate, dimethyl carbonate, and ethyl methyl carbonate at a weight ratio of (2-4):(2-4):(3-5).

S4. The positive electrode, the negative electrode, and a separator are wound to form an electrode group, followed by injection of an electrolyte solution with a filling coefficient of the electrolyte solution being in a range from 3.8 g/Ah to 6 g/Ah, to obtain a battery core.

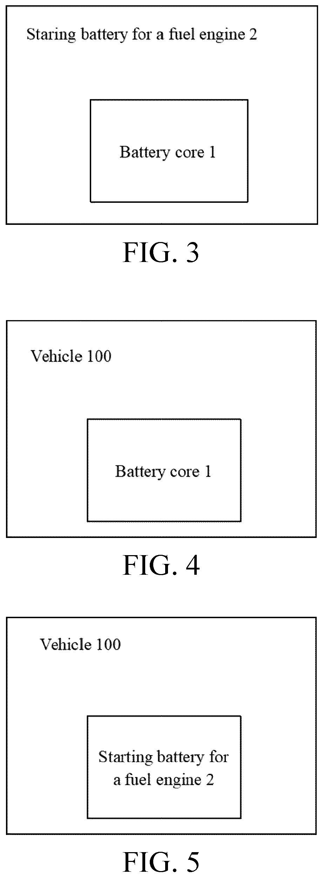

A third aspect of the present disclosure provides a starting battery for a fuel engine 2, including the battery core 1 according to the present disclosure or a battery core prepared by the method according to the present disclosure, as shown in Fig. 3.

A fourth aspect of the present disclosure provides a vehicle 100, including the battery core 1 according to the present disclosure, a battery core prepared by the method according to the present disclosure, or a starting battery for a fuel engine 2 according to the present disclosure, as shown in Fig. 4 or Fig. 5.

The present disclosure will be described in detail below through examples and comparative examples. The methods given in the examples and comparative examples below are all conventional methods, unless otherwise stated. The reagents and materials used are commercially available, unless otherwise stated. Measurement methods involved in the embodiments and comparative examples are specifically as follows.

Cold-start voltage testing method: The battery is stored at 65°C and 100% SOC and deteriorated to 80%, and discharged at 5C for 2s at -30°C and 50% SOC, and a cutoff voltage is recorded.

Method for testing cycling capacity retention rate at 60°C: A1C charge-discharge cycle test is performed at 60°C and 82.5%-100% SOC, and 1000 cycles are performed. The capacity of each cycle is recorded, and a retention rate relative to an initial capacity is calculated.

The following examples are used to illustrate the preparation of soft-pack lithium iron phosphate batteries.

### Example 1

S1. Preparation of positive electrode: Based on the total weight of a positive electrode powder, 92 wt% of composite lithium iron phosphate particles, 4.5 wt% of a first conductive agent (2 wt% of SP and 2.5 wt% of CNTs) and 3.5 wt% of a first binder (PVDF having a weight average molecular weight of 1,100,000 g/mol) were weighed in percentages by weight to obtain the positive electrode powder, followed by addition of a first solvent (NMP, in an amount of 0.7 mL per 1 g of the positive electrode powder) and mixing by a vacuum stirrer to obtain a positive electrode slurry, which was coated and rolled to obtain a positive electrode having a double-sided density of 220 g/m² and a compaction density of 2.2 g/cm³. The composite lithium iron phosphate particles were a mixture of lithium iron phosphate particles A, lithium iron phosphate particles B, and lithium iron phosphate particles C respectively having D₅₀ particle diameters of 2 µm, 6 µm, and 10 µm.

The contents of the lithium iron phosphate particles A, the lithium iron phosphate particles B, and the lithium iron phosphate particles C in the composite lithium iron phosphate particles were 20 wt%, 30 wt%, and 50 wt%, respectively, based on the total weight of the composite lithium iron phosphate particles.

S2. Preparation of negative electrode: Based on the total weight of a negative electrode powder, 92 wt% of a mixture of composite graphite particles and hard carbon (where the content of the hard carbon was 10 wt% based on the total weight of the mixture of composite graphite particles and hard carbon, and the D₅₀ particle diameter of the hard carbon was 5 µm), 4 wt% of a second conductive agent (SP), and 4 wt% of a second binder (1.5 wt% of CMC having a weight average molecular weight of 400,000 g/mol and 2.5 wt% of SBR) were weighed in percentages by weight to obtain a negative electrode powder, followed by addition of a second solvent (deionized water, in an amount of 1 mL per 1 g of the positive electrode powder) and mixing by a vacuum stirrer to obtain a negative electrode slurry, which was coated and rolled to obtain a negative electrode having a double-sided density of 95 g/m² and a compaction density of 1.4 g/cm³. The composite graphite particles are a mixture of graphite particle A and graphite particle B respectively having D₅₀ particle diameters of 6 µm and 10 µm.

OI values of the graphite particles A and the graphite particles B were 5 and 4.5, respectively, and an OI value of the composite graphite particles was 4.6. The contents of the graphite particles A and the graphite particles B were 25 wt% and 75 wt%, respectively, based on the total weight of the composite graphite particles.

S3. Preparation of electrolyte solution: Based on the total weight of the electrolyte solution, 1.1 mol/L of a lithium salt, 4.5 mol/L of an additive, and a solvent 3 were weighed and mixed. The lithium salt was a mixture of lithium hexafluorophosphate, lithium bis(fluorosulfonyl)imide, and lithium difluoro(oxalato)borate at a weight ratio of 7:3:1. The additive was a mixture of VC and FEC at a weight ratio of 2.5:3. The solvent 3 was a mixture of ethylene carbonate, dimethyl carbonate, and ethyl methyl carbonate at a weight ratio of 3:3:4.

S4. The positive electrode, the negative electrode, and a separator (a PP/PE/PP separator having a porosity of 40% and a thickness of 15 µm, purchased from SEMCORP) were wound to form an electrode group, followed by injection of an electrolyte solution with a filling coefficient of the electrolyte solution being 6 g/Ah, to obtain a battery core, and the battery core was packaged to obtain a 20Ah soft-pack lithium iron phosphate battery.

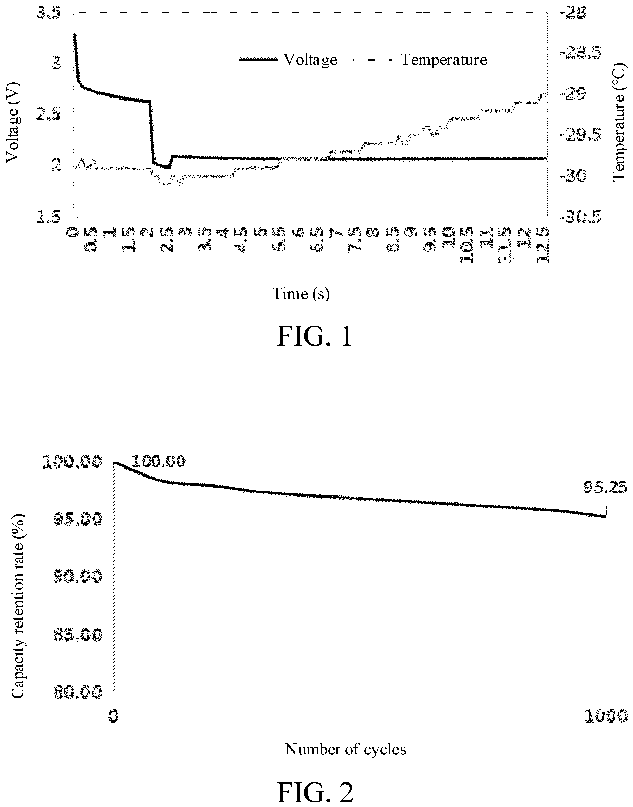

It can be seen from a cold-start discharge curve of the soft-pack lithium iron phosphate battery at -30°C in FIG. 1 that the voltage is 2.627 V and the temperature rise is 0.9°C when discharged at 5C for 2s, indicating that the soft-pack lithium iron phosphate battery has excellent low-temperature starting performance.

As can be seen from a capacity retention rate curve of the soft-pack lithium iron phosphate battery after 1000 cycles at 60°C in FIG. 2, the capacity retention rate of the soft-pack lithium iron phosphate battery prepared in this example after 1000 cycles is 95.25%, indicating that the soft-pack lithium iron phosphate battery has very excellent high-temperature cycle performance.

### Example 2

A soft-pack lithium iron phosphate battery was prepared according to the method of Example 1, except that the composite lithium iron phosphate particles serving as the active material of the positive electrode were a mixture of lithium iron phosphate particles A having a D₅₀ particle diameter of 2 µm and lithium iron phosphate particles B having a D₅₀ particle diameter of 6 µm. Specifically, in S1, the contents of the lithium iron phosphate particles A and the lithium iron phosphate particles B in the composite lithium iron phosphate particles were 54.3 wt% and 45.7 wt%, respectively, based on the total weight of the composite lithium iron phosphate particles. The soft-pack lithium iron phosphate battery was prepared.

### Example 3

A soft-pack lithium iron phosphate battery was prepared according to the method of Example 1, except that the composite lithium iron phosphate particles serving as the active material of the positive electrode were a mixture of lithium iron phosphate particles A having a D₅₀ particle diameter of 2 µm and lithium iron phosphate particles D having a D₅₀ particle diameter of 20 µm. Specifically, in S1, the contents of the lithium iron phosphate particles A and the lithium iron phosphate particles D in the composite lithium iron phosphate particles were 60 wt% and 40 wt%, respectively, based on the total weight of the composite lithium iron phosphate particles. The soft-pack lithium iron phosphate battery was prepared.

### Example 4

A soft-pack lithium iron phosphate battery was prepared according to the method of Example 1, except that the composite lithium iron phosphate particles serving as the active material of the positive electrode were a mixture of lithium iron phosphate particles B, lithium iron phosphate particles C, and lithium iron phosphate particles D respectively having D₅₀ particle diameters of 6 µm, 10 µm, and 20 µm. Specifically, in S 1, the contents of the lithium iron phosphate particles B, the lithium iron phosphate particles C, and the lithium iron phosphate particles D in the composite lithium iron phosphate particles were 40 wt%, 50 wt%, and 10 wt%, respectively, based on the total weight of the composite lithium iron phosphate particles. The soft-pack lithium iron phosphate battery was prepared.

### Example 5

A soft-pack lithium iron phosphate battery was prepared according to the method of Example 1, except that the composite lithium iron phosphate particles serving as the active material of the positive electrode were a mixture of lithium iron phosphate particles A, lithium iron phosphate particles B, lithium iron phosphate particles C, and lithium iron phosphate particles D respectively having D₅₀ particle diameters of 2 µm, 6 µm, 10 µm, and 20 µm. Specifically, in S1, the contents of the lithium iron phosphate particles A, the lithium iron phosphate particles B, the lithium iron phosphate particles C, and the lithium iron phosphate particles D in the composite lithium iron phosphate particles were 15 wt%, 25 wt%, 50 wt%, and 10 wt%, respectively, based on the total weight of the composite lithium iron phosphate particles. The soft-pack lithium iron phosphate battery was prepared.

### Example 6

A soft-pack lithium iron phosphate battery was prepared according to the method of Example 1, except that the composite lithium iron phosphate particles serving as the active material of the positive electrode were a mixture of lithium iron phosphate particles A, lithium iron phosphate particles B, and lithium iron phosphate particles D respectively having D₅₀ particle diameters of 2 µm, 6 µm, and 20 µm. Specifically, in S1, the contents of the lithium iron phosphate particles A, the lithium iron phosphate particles B, and the lithium iron phosphate particles D in the composite lithium iron phosphate particles were 21.7 wt%, 50 wt%, and 28.3 wt%, respectively, based on the total weight of the composite lithium iron phosphate particles. The soft-pack lithium iron phosphate battery was prepared.

### Example 7

A soft-pack lithium iron phosphate battery was prepared according to the method of Example 1, except that the ratio of the lithium iron phosphate particles A, the lithium iron phosphate particles B, and the lithium iron phosphate particles C in the composite lithium iron phosphate particles serving as the active material of the positive electrode was different. Specifically, in S1, the contents of the lithium iron phosphate particles A, the lithium iron phosphate particles B, and the lithium iron phosphate particles C in the composite lithium iron phosphate particles were 5 wt%, 10 wt%, and 85 wt%, respectively, based on the total weight of the composite lithium iron phosphate particles. The soft-pack lithium iron phosphate battery was prepared.

### Example 8

A soft-pack lithium iron phosphate battery was prepared according to the method of Example 1, except that the ratio of the composite graphite particles and the hard carbon in the active material of the negative electrode was different. Specifically, in S2, the content of the hard carbon was 5 wt% based on the total weight of the mixture of the composite graphite particles and the hard carbon. The soft-pack lithium iron phosphate battery was prepared.

### Example 9

A soft-pack lithium iron phosphate battery was prepared according to the method of Example 1, except that the ratio of the graphite particles A and the graphite particles B in the active material of the negative electrode was different. Specifically, in S2, the contents of the graphite particles A and the graphite particles B were 80 wt% and 20 wt%, respectively, based on the total weight of the composite graphite particles. The soft-pack lithium iron phosphate battery was prepared.

### Example 10

A soft-pack lithium iron phosphate battery was prepared according to the method of Example 1, except that hard carbon having a D₅₀ particle diameter of 15 µm was used in the active material of the negative electrode. The soft-pack lithium iron phosphate battery was prepared.

### Example 11

A soft-pack lithium iron phosphate battery was prepared according to the method of Example 1, except that graphite particles A and B respectively having OI values of 9 and 8 were used in the active material of the negative electrodes, and the OI value of the composite graphite particles obtained by mixing was 8.3. The soft-pack lithium iron phosphate battery was prepared.

### Example 12

A soft-pack lithium iron phosphate battery was prepared according to the method of Example 1, except that the composite graphite particles in the active material of the negative electrode were a mixture of graphite particles C having a D₅₀ particle diameter of 3 µm and graphite particles D having a D₅₀ particle diameter of 15 µm. Specifically, in S2, OI values of the graphite particles C and the graphite particles D were 5 and 6, respectively, and an OI value of the composite graphite particles was 5.4. The contents of the graphite particles C and the graphite particles D were 25 wt% and 75 wt%, respectively, based on the total weight of the composite graphite particles. The soft-pack lithium iron phosphate battery was prepared.

### Example 13

A soft-pack lithium iron phosphate battery was prepared according to the method of Example 1, except that the type of the lithium salt in the electrolyte solution was different. Specifically, in S3, the lithium salt is a mixture of lithium hexafluorophosphate and lithium bis(fluorosulfonyl)imide at a weight ratio of 2:1. The soft-pack lithium iron phosphate battery was prepared.

### Example 14

A soft-pack lithium iron phosphate battery was prepared according to the method of Example 1, except that the type of the lithium salt in the electrolyte solution was different. Specifically, in S3, the lithium salt was a mixture of lithium bis(fluorosulfonyl)imide, lithium bis(trifluoromethanesulphonyl)imide, lithium difluoro(oxalato)borate, and lithium bis(oxalato)borate at a weight ratio of 35:10:8: 1. The soft-pack lithium iron phosphate battery was prepared.

### Example 15

A soft-pack lithium iron phosphate battery was prepared according to the method of Example 1, except that the weight ratio of lithium hexafluorophosphate, lithium bis(fluorosulfonyl)imide, and lithium difluoro(oxalato)borate in the lithium salt was different. Specifically, in S3, the lithium salt was a mixture of lithium hexafluorophosphate, lithium bis(fluorosulfonyl)imide, and lithium difluoro(oxalato)borate at a weight ratio of 3:7:1. The soft-pack lithium iron phosphate battery was prepared.

### Example 16

A soft-pack lithium iron phosphate battery was prepared according to the method of Example 1, except that the type of the additive in the electrolyte solution was different. Specifically, in S3, the additive was a mixture of VC, DTD, and FEC at a weight ratio of 2:1:1.5. The soft-pack lithium iron phosphate battery was prepared.

### Example 17

A soft-pack lithium iron phosphate battery was prepared according to the method of Example 1, except that the weight ratio of VC and FEC in the additive was different. Specifically, the weight ratio of VC and FEC was 3:1. The soft-pack lithium iron phosphate battery was prepared.

### Example 18

A soft-pack lithium iron phosphate battery was prepared according to the method of Example 1, except that the type of the first conductive agent used for preparing the positive electrode was different. Specifically, in S1, "4.5 wt% of a first conductive agent (2 wt% of SP and 2.5 wt% of CNTs)" was replaced with "4.5 wt% of a first conductive agent (2 wt% of SP, 1.5 wt% of CNTs, and 1 wt% of graphene)". The soft-pack lithium iron phosphate battery was prepared.

### Example 19

A soft-pack lithium iron phosphate battery was prepared according to the method of Example 1, except that the type of the second conductive agent used for preparing the negative electrode was different. Specifically, in S2, "4 wt% of a second conductive agent (SP)" was replaced with "4 wt% of a second conductive agent (CNTs)". The soft-pack lithium iron phosphate battery was prepared.

### Example 20

A soft-pack lithium iron phosphate battery was prepared according to the method of Example 1, except that the active material of the positive electrode was a mixture of lithium iron phosphate particles A having a D₅₀ particle diameter of 2 µm and lithium iron phosphate particles B having a D₅₀ particle diameter of 6 µm, and the active material of the negative electrode did not contain hard carbon, and was a mixture of graphite particles A having a D₅₀ particle diameter of 6 µm and graphite particles B having a D₅₀ particle diameter of 10 µm. Specifically, in S1, the contents of the lithium iron phosphate particles A and the lithium iron phosphate particles B were 54.3 wt% and 45.7 wt%, respectively, based on the total weight of the composite lithium iron phosphate particles. In S2, the contents of the graphite particles A and the graphite particles B were 25 wt% and 75 wt%, respectively, based on the total weight of the composite graphite particles. The soft-pack lithium iron phosphate battery was prepared.

### Example 21

A soft-pack lithium iron phosphate battery was prepared according to the method of Example 1, except that the active material of the negative electrode did not contain hard carbon, and was a mixture of graphite particles A having a D₅₀ particle diameter of 6 µm and graphite particles B having a D₅₀ particle diameter of 10 µm. Specifically, in S2, the contents of the graphite particles A and the graphite particles B were 25 wt% and 75 wt%, respectively, based on the total weight of the composite graphite particles. The soft-pack lithium iron phosphate battery was prepared.

### Example 22

A soft-pack lithium iron phosphate battery was prepared according to the method of Example 1, except that the active material of the positive electrode was a mixture of lithium iron phosphate particles A having a D₅₀ particle diameter of 2 µm and lithium iron phosphate particles D having a D₅₀ particle diameter of 20 µm, and the active material of the negative electrode did not contain hard carbon, and was a mixture of graphite particles A having a D₅₀ particle diameter of 6 µm and graphite particles B having a D₅₀ particle diameter of 10 µm. Specifically, in S1, the contents of the lithium iron phosphate particles A and the lithium iron phosphate particles D were 60 wt% and 40 wt%, respectively, based on the total weight of the composite lithium iron phosphate particles. In S2, the contents of the graphite particles A and the graphite particles B were 25 wt% and 75 wt%, respectively, based on the total weight of the composite graphite particles. The soft-pack lithium iron phosphate battery was prepared.

### Example 23

A soft-pack lithium iron phosphate battery was prepared according to the method of Example 1, except that the active material of the positive electrode was a mixture of lithium iron phosphate particles B, lithium iron phosphate particles C, and lithium iron phosphate particles D respectively having D₅₀ particle diameters of 6 µm, 10 µm, and 20 µm, and the active material of the negative electrode did not contain hard carbon, and was a mixture of graphite particles A having a D₅₀ particle diameter of 6 µm and graphite particles B having a D₅₀ particle diameter of 10 µm. Specifically, in S1, the contents of the lithium iron phosphate particles B, the lithium iron phosphate particles C, and the lithium iron phosphate particles D were 40 wt%, 50 wt%, and 10 wt%, respectively, based on the total weight of the composite lithium iron phosphate particles. In S2, the contents of the graphite particles A and the graphite particles B were 25 wt% and 75 wt%, respectively, based on the total weight of the composite graphite particles. The soft-pack lithium iron phosphate battery was prepared.

### Example 24

A soft-pack lithium iron phosphate battery was prepared according to the method of Example 1, except that the active material of the positive electrode was a mixture of lithium iron phosphate particles A, lithium iron phosphate particles B, lithium iron phosphate particles C, and lithium iron phosphate particles D respectively having D₅₀ particle diameters of 2 µm, 6 µm, 10 µm, and 20 µm, and the active material of the negative electrode did not contain hard carbon, and was a mixture of graphite particles A having a D₅₀ particle diameter of 6 µm and graphite particles B having a D₅₀ particle diameter of 10 µm. Specifically, in S1, the contents of the lithium iron phosphate particles A, the lithium iron phosphate particles B, the lithium iron phosphate particles C, and the lithium iron phosphate particles D were 15 wt%, 25 wt%, 50 wt%, and 10 wt%, respectively, based on the total weight of the composite lithium iron phosphate particles. In S2, the contents of the graphite particles A and the graphite particles B were 25 wt% and 75 wt%, respectively, based on the total weight of the composite graphite particles. The soft-pack lithium iron phosphate battery was prepared.

### Comparative Example 1

A soft-pack lithium iron phosphate battery was prepared according to the method of Example 1, except that the active material of the positive electrode was lithium iron phosphate particles A having a D₅₀ particle diameter of 2 µm, and the active material of the negative electrode was graphite particles A having a D₅₀ particle diameter of 6 µm. Specifically, in S1, 92 wt% of the lithium iron phosphate particles A, 4.5 wt% of the first conductive agent (2 wt% of SP and 2.5 wt% of CNTs), and 3.5 wt% of the first binder were weighed in percentages by weight based on the total weight of the positive electrode powder to obtain the positive electrode powder. In S2, 92 wt% of the graphite particles A (having an OI value of 5), 4 wt% of the second conductive agent (SP), and 4 wt% of the second binder (1.5 wt% of CMC having a weight average molecular weight of 400,000 g/mol and 2.5 wt% of SBR) were weighed in percentages by weight based on the total weight of the negative electrode powder to obtain the negative electrode powder. The soft-pack lithium iron phosphate battery was prepared.

### Comparative Example 2

A soft-pack lithium iron phosphate battery was prepared according to the method of Example 1, except that the active material of the positive electrode was lithium iron phosphate particles B having a D₅₀ particle diameter of 6 µm, and the active material of the negative electrode was graphite particles A having a D₅₀ particle diameter of 6 µm. Specifically, in S1, 92 wt% of the lithium iron phosphate particles B, 4.5 wt% of the first conductive agent (2 wt% of SP and 2.5 wt% of CNTs), and 3.5 wt% of the first binder were weighed in percentages by weight based on the total weight of the positive electrode powder to obtain the positive electrode powder. In S2, 92 wt% of the graphite particles A (having an OI value of 5), 4 wt% of the second conductive agent (SP), and 4 wt% of the second binder (1.5 wt% of CMC having a weight average molecular weight of 400,000 g/mol and 2.5 wt% of SBR) were weighed in percentages by weight based on the total weight of the negative electrode powder to obtain the negative electrode powder. The soft-pack lithium iron phosphate battery was prepared.

### Comparative Example 3

A soft-pack lithium iron phosphate battery was prepared according to the method of Example 1, except that the active material of the positive electrode was lithium iron phosphate particles C having a D₅₀ particle diameter of 10 µm, and the active material of the negative electrode was graphite particles A having a D₅₀ particle diameter of 6 µm. Specifically, in S1, 92 wt% of the lithium iron phosphate particles C, 4.5 wt% of the first conductive agent (2 wt% of SP and 2.5 wt% of CNTs), and 3.5 wt% of the first binder were weighed in percentages by weight based on the total weight of the positive electrode powder to obtain the positive electrode powder. In S2, 92 wt% of the graphite particles A (having an OI value of 5), 4 wt% of the second conductive agent (SP), and 4 wt% of the second binder (1.5 wt% of CMC having a weight average molecular weight of 400,000 g/mol and 2.5 wt% of SBR) were weighed in percentages by weight based on the total weight of the negative electrode powder to obtain the negative electrode powder. The soft-pack lithium iron phosphate battery was prepared.

### Comparative Example 4

A soft-pack lithium iron phosphate battery was prepared according to the method of Example 1, except that the active material of the positive electrode was lithium iron phosphate particles D having a D₅₀ particle diameter of 20 µm, and the active material of the negative electrode was graphite particles A having a D₅₀ particle diameter of 6 µm. Specifically, in S1, 92 wt% of the lithium iron phosphate particles D, 4.5 wt% of the first conductive agent (2 wt% of SP and 2.5 wt% of CNTs), and 3.5 wt% of the first binder were weighed in percentages by weight based on the total weight of the positive electrode powder to obtain the positive electrode powder. In S2, 92 wt% of the graphite particles A (having an OI value of 5), 4 wt% of the second conductive agent (SP), and 4 wt% of the second binder (1.5 wt% of CMC having a weight average molecular weight of 400,000 g/mol and 2.5 wt% of SBR) were weighed in percentages by weight based on the total weight of the negative electrode powder to obtain the negative electrode powder. The soft-pack lithium iron phosphate battery was prepared.

### Comparative Example 5

A soft-pack lithium iron phosphate battery was prepared according to the method of Example 1, except that the active material of the positive electrode was lithium iron phosphate particles A having a D₅₀ particle diameter of 2 µm, and the active material of the negative electrode was graphite particles B having a D₅₀ particle diameter of 10 µm. Specifically, in S1, 92 wt% of the lithium iron phosphate particles A, 4.5 wt% of the first conductive agent (2 wt% of SP and 2.5 wt% of CNTs), and 3.5 wt% of the first binder were weighed in percentages by weight based on the total weight of the positive electrode powder to obtain the positive electrode powder. In S2, 92 wt% of the graphite particles B (having an OI value of 4.5), 4 wt% of the second conductive agent (SP), and 4 wt% of the second binder (1.5 wt% of CMC having a weight average molecular weight of 400,000 g/mol and 2.5 wt% of SBR) were weighed in percentages by weight based on the total weight of the negative electrode powder to obtain the negative electrode powder. The soft-pack lithium iron phosphate battery was prepared.

### Comparative Example 6

A soft-pack lithium iron phosphate battery was prepared according to the method of Example 1, except that the active material of the positive electrode was lithium iron phosphate particles B having a D₅₀ particle diameter of 6 µm, and the active material of the negative electrode was graphite particles B having a D₅₀ particle diameter of 10 µm. Specifically, in S1, 92 wt% of the lithium iron phosphate particles B, 4.5 wt% of the first conductive agent (2 wt% of SP and 2.5 wt% of CNTs), and 3.5 wt% of the first binder were weighed in percentages by weight based on the total weight of the positive electrode powder to obtain the positive electrode powder. In S2, 92 wt% of the graphite particles B (having an OI value of 4.5), 4 wt% of the second conductive agent (SP), and 4 wt% of the second binder (1.5 wt% of CMC having a weight average molecular weight of 400,000 g/mol and 2.5 wt% of SBR) were weighed in percentages by weight based on the total weight of the negative electrode powder to obtain the negative electrode powder. The soft-pack lithium iron phosphate battery was prepared.

### Comparative Example 7

A soft-pack lithium iron phosphate battery was prepared according to the method of Example 1, except that the active material of the positive electrode was lithium iron phosphate particles C having a D₅₀ particle diameter of 10 µm, and the active material of the negative electrode was graphite particles B having a D₅₀ particle diameter of 10 µm. Specifically, in S1, 92 wt% of the lithium iron phosphate particles C, 4.5 wt% of the first conductive agent (2 wt% of SP and 2.5 wt% of CNTs), and 3.5 wt% of the first binder were weighed in percentages by weight based on the total weight of the positive electrode powder to obtain the positive electrode powder. In S2, 92 wt% of the graphite particles B (having an OI value of 4.5), 4 wt% of the second conductive agent (SP), and 4 wt% of the second binder (1.5 wt% of CMC having a weight average molecular weight of 400,000 g/mol and 2.5 wt% of SBR) were weighed in percentages by weight based on the total weight of the negative electrode powder to obtain the negative electrode powder. The soft-pack lithium iron phosphate battery was prepared.

### Comparative Example 8

A soft-pack lithium iron phosphate battery was prepared according to the method of Example 1, except that the active material of the positive electrode was lithium iron phosphate particles D having a D₅₀ particle diameter of 20 µm, and the active material of the negative electrode was graphite particles B having a D₅₀ particle diameter of 10 µm. Specifically, in S1, 92 wt% of the lithium iron phosphate particles D, 4.5 wt% of the first conductive agent (2 wt% of SP and 2.5 wt% of CNTs), and 3.5 wt% of the first binder were weighed in percentages by weight based on the total weight of the positive electrode powder to obtain the positive electrode powder. In S2, 92 wt% of the graphite particles B (having an OI value of 4.5), 4 wt% of the second conductive agent (SP), and 4 wt% of the second binder (1.5 wt% of CMC having a weight average molecular weight of 400,000 g/mol and 2.5 wt% of SBR) were weighed in percentages by weight based on the total weight of the negative electrode powder to obtain the negative electrode powder. The soft-pack lithium iron phosphate battery was prepared.

### Test Example

The cold-start voltage and the capacity retention rate after 1000 cycles of the soft-pack lithium iron phosphate battery prepared in each of examples and comparative examples were measured.

The results are shown in Table 1.

**Table 1**

| No. | Cold-start voltage, V | Capacity retention rate after 1000 cycles at 60°C (17.5% DOD), % |
|---|---|---|
| Example 1 | 2.627 | 95.25 |
| Example 2 | 2.625 | 88.16 |
| Example 3 | 2.582 | 88.82 |
| Example 4 | 2.636 | 89.34 |
| Example 5 | 2.686 | 82.25 |
| Example 6 | 2.601 | 88.34 |
| Example 7 | 2.335 | 85.55 |
| Example 8 | 2.527 | 87.32 |
| Example 9 | 2.571 | 88.09 |
| Example 10 | 2.498 | 88.92 |
| Example 11 | 2.594 | 94.26 |
| Example 12 | 2.608 | 90.88 |
| Example 13 | 2.612 | 93.55 |
| Example 14 | 2.619 | 95.01 |
| Example 15 | 2.678 | 88.28 |
| Example 16 | 2.501 | 91.26 |
| Example 17 | 2.432 | 90.78 |
| Example 18 | 2.63 | 92.18 |
| Example 19 | 2.632 | 92.54 |
| Example 20 | 2.602 | 80.08 |
| Example 21 | 2.578 | 86.18 |
| Example 22 | 2.561 | 84.06 |
| Example 23 | 2.602 | 85.31 |
| Example 24 | 2.62 | 83.06 |
| Comparative Example 1 | 2.565 | 79.12 |
| Comparative Example 2 | 2.561 | 80.25 |
| Comparative Example 3 | 2.549 | 81.46 |
| Comparative Example 4 | 2.42 | 82.78 |
| Comparative Example 5 | 2.558 | 79.68 |
| Comparative Example 6 | 2.542 | 80.67 |
| Comparative Example 7 | 2.533 | 81.98 |
| Comparative Example 8 | 2.39 | 83.87 |

From the results in Table 1, it can be seen that the lithium iron phosphate batteries provided by the present disclosure in Examples 1 to 24 can have excellent high- and low-temperature performance; while in Comparative Examples 1 to 8, the active material of the positive electrode was lithium iron phosphate particles having a single D₅₀ particle diameter, the active material of the negative electrode was graphite particles having a single D₅₀ particle diameter, and the low-temperature cold-start performance and/or life of the battery was significantly reduced as compared with Examples 1 to 24. It indicates that by mixing at least two types of lithium iron phosphate particles having different particle diameters to serve as the active material of the positive electrode and mixing at least two types of graphite particles having different particle diameters to serve as the active material of the negative electrode, the prepared lithium iron phosphate battery can have both good high-rate discharge performance at low-temperature and a long high-temperature cycle life.

In addition, in Example 2, the composite lithium iron phosphate particles included only small lithium iron phosphate particles A and lithium iron phosphate particles B (having a D₅₀ particle diameter of less than or equal to 7 µm), and compared with Example 1, the cold-start voltage did not change significantly, but the high-temperature cycling capacity retention rate was significantly decreased, indicating that a battery prepared using a positive electrode active material including only small lithium iron phosphate particles having a D₅₀ particle diameter of less than or equal to 7 µm has a high cold-start voltage but a low high-temperature cycling capacity retention rate. In Examples 3 to 6, the combination of lithium iron phosphate particles having different D₅₀ particle diameters in the active material of the positive electrode was changed. In Example 7, the ratio of the lithium iron phosphate particles A, the lithium iron phosphate particles B, and the lithium iron phosphate particles C in the composite lithium iron phosphate particles was changed. In Example 8, the ratio of the composite graphite particles and the hard carbon was changed. In Example 9, the ratio of the graphite particles A and the graphite particles B was changed. In Example 10, the D₅₀ particle diameter of the hard carbon was changed. In Example 11, the OI value of the composite graphite particles was changed. In Example 12, the combination of graphite particles having different D₅₀ particle diameters was changed. In Examples 13 to 15, the type, composition, and formulation of the lithium salt were changed. In Examples 16 and 17, the type, composition, and formulation of the additive in the electrolyte solution were changed. In Examples 18 and 19, the types of the conductive agents in the positive and negative electrodes were changed. In Example 21, the active material of the negative electrode did not include hard carbon. In Examples 20 and 22-24, the active material of the negative electrode did not include hard carbon, and the combination of lithium iron phosphate particles having different D₅₀ particle diameters in the active material of the positive electrode was changed. Compared with Example 1, the cold-start voltage or high-temperature cycling capacity retention rate of the prepared batteries was reduced to some extent, indicating that the combination of lithium iron phosphate particles having different D₅₀ particle diameters in the positive electrode material, the combination of graphite particles having different D₅₀ particle diameters in the negative electrode material, the proportion of the hard carbon, the D₅₀ particle diameter of hard carbon, the OI value of the composite graphite particles, the types of the conductive agents in the positive and negative electrodes, and the types, compositions, and formulations of the lithium salt and the additive in the electrolyte solution jointly affect the cold-start voltage and high-temperature cycling capacity retention rate of the prepared battery. The combination of the conductive agents in the positive and negative electrodes, the electrolyte solution, and the positive and negative electrode materials further improves the cold-start performance and high-temperature life of the prepared battery, so that excellent high- and low-temperature performance can be achieved.

Although preferred implementations of the present disclosure have been described in detail above, the present disclosure is not limited thereto. Various simple modifications can be made to the technical solutions of the present disclosure without departing from the scope of the technical concept of the present disclosure, including combinations of various technical features in any other suitable manner. Such simple modifications and combinations should also be regarded as the content disclosed by the present disclosure and all fall within the scope of protection of the present disclosure.

## Claims

1. A battery core, comprising a positive electrode and a negative electrode,
the positive electrode comprising composite lithium iron phosphate particles, the composite lithium iron phosphate particles comprising at least two types of lithium iron phosphate particles having different D₅₀ particle diameters; and
the negative electrode comprising composite graphite particles, the composite graphite particles comprising at least two types of graphite particles having different D₅₀ particle diameters.

2. The battery core according to claim 1, wherein an orientation index, OI, value of the composite graphite particles is less than or equal to 7.

3. The battery core according to claim 1 or 2, wherein the negative electrode further comprises hard carbon.

4. The battery core according to claim 3, wherein a D₅₀ particle diameter of the hard carbon is in a range from 3 µm to 10 µm.

5. The battery core according to claim 3 or 4, wherein a weight ratio of the composite graphite particles to the hard carbon is (85-95):(5-15).

6. The battery core according to any one of claims 1 to 5, wherein the composite graphite particles comprise graphite particles A and graphite particles B, wherein a D₅₀ particle diameter of the graphite particles A is in a range from 5 µm to 7 µm, and a D₅₀ particle diameter of the graphite particles B is in a range from 9 µm to 11 µm;
optionally wherein contents of the graphite particles A and the graphite particles B in the composite graphite particles are in a range from 25 wt% to 75 wt% and in a range from 25 wt% to 75 wt%, respectively, based on the total weight of the composite graphite particles.

7. The battery core according to any one of claims 1 to 6, wherein the composite lithium iron phosphate particles comprise at least two of lithium iron phosphate particles A, lithium iron phosphate particles B, lithium iron phosphate particles C, and lithium iron phosphate particles D, wherein D₅₀ particle diameters of the lithium iron phosphate particles A, the lithium iron phosphate particles B, the lithium iron phosphate particles C, and the lithium iron phosphate particles D are in a range from 1 µm to 3 µm, in a range from 5 µm to 7 µm, in a range from 9 µm to 11 µm, and in a range from 18 µm to 20 µm, respectively;
optionally wherein the total content of the lithium iron phosphate particles A and the lithium iron phosphate particles B is less than or equal to 75 wt% based on the total weight of the composite lithium iron phosphate particles;
optionally wherein the composite lithium iron phosphate particles are a mixture of the lithium iron phosphate particles A, the lithium iron phosphate particles B, and the lithium iron phosphate particles C; and preferably, the contents of the lithium iron phosphate particles A, the lithium iron phosphate particles B, and the lithium iron phosphate particles C in the composite lithium iron phosphate particles are in a range from 10 wt% to 30 wt%, in a range from 20 wt% to 40 wt%, and in a range from 30 wt% to 70 wt%, respectively, based on the total weight of the composite lithium iron phosphate particles.

8. The battery core according to any one of claims 1 to 7, further comprising an electrolyte solution containing a lithium salt, wherein
preferably, the lithium salt comprises lithium hexafluorophosphate and further comprises at least one selected from lithium bis(fluorosulfonyl)imide, lithium bis(trifluoromethanesulphonyl)imide, lithium bis(oxalato)borate, and lithium difluoro(oxalato)borate;
preferably, the lithium salt is a mixture of lithium hexafluorophosphate, lithium bis(fluorosulfonyl)imide, and lithium difluoro(oxalato)borate;
preferably, the weight ratio of lithium hexafluorophosphate, lithium bis(fluorosulfonyl)imide, and lithium difluoro(oxalato)borate in the lithium salt is (5-10):(2-5):(0.5-1); and
preferably, the content of the lithium salt in the electrolyte solution is in a range from 0.8 mol/L to 1.2 mol/L.

9. The battery core according to any one of claims 1 to 8, further comprising an electrolyte solution containing an additive, wherein the additive is at least one selected from vinylene carbonate, fluoroethylene carbonate, and ethylene sulfate;
preferably, the additive is a mixture of vinylene carbonate and fluoroethylene carbonate; preferably, the content of the additive in the electrolyte solution is in a range from 1.5 mol/L to 5 mol/L; and
preferably, the weight ratio of vinylene carbonate and fluoroethylene carbonate in the additive is (1.5-3.5):(2-5).

10. The battery core according to any one of claims 1 to 9, further comprising an electrolyte solution containing a solvent, wherein the solvent is at least one selected from ethylene carbonate, diethyl carbonate, ethyl methyl carbonate, and dimethyl carbonate;
preferably, the solvent is a mixture of ethylene carbonate, dimethyl carbonate, and ethyl methyl carbonate;
preferably, the weight ratio of ethylene carbonate, dimethyl carbonate, and ethyl methyl carbonate in the solvent is (2-4):(2-4):(3-5).

11. The battery core according to any one of claims 1 to 10, wherein the positive electrode comprises a positive electrode current collector and a positive electrode material layer on the positive electrode current collector, wherein the content of the composite lithium iron phosphate particles in the positive electrode material layer is in a range from 90 wt% to 94 wt% based on the total weight of the positive electrode material layer; and
preferably, the negative electrode comprises a negative electrode current collector and a negative electrode material layer on the negative electrode current collector, wherein the total content of the composite graphite particles and the hard carbon in the negative electrode material layer is in a range from 90 wt% to 95 wt% based on the total weight of the negative electrode material layer; and
preferably, the content of the hard carbon is less than or equal to 15 wt% based on the total weight of the composite graphite particles and the hard carbon.

12. A battery core preparation method, comprising:
providing a positive electrode, the positive electrode comprising composite lithium iron phosphate particles, the composite lithium iron phosphate particles comprising at least two types of lithium iron phosphate particles having different D₅₀ particle diameters;
providing a negative electrode, the negative electrode comprising composite graphite particles, the composite graphite particles comprising at least two types of graphite particles having different D₅₀ particle diameters; and
assembling the positive electrode and the negative electrode into a battery core.

13. The method according to claim 12, wherein a method for preparing the positive electrode comprises: mixing at least two types of lithium iron phosphate particles having different D₅₀ particle diameters to obtain the composite lithium iron phosphate particles; and mixing the composite lithium iron phosphate particles, a first conductive agent, a first binder, and a first solvent to obtain a positive electrode slurry, and then applying the positive electrode slurry to a surface of a positive electrode current collector, followed by rolling to obtain the positive electrode; and
preferably, a method for preparing the negative electrode comprises: mixing at least two types of graphite particles having different D₅₀ particle diameters to obtain the composite graphite particles; and mixing the composite graphite particles, hard carbon, a second conductive agent, a second binder, and a second solvent to obtain a negative electrode slurry, and then applying the negative electrode slurry to a surface of a negative electrode current collector, followed by rolling to obtain the negative electrode.

14. A starting battery for a fuel engine, comprising the battery core according to any one of claims 1 to 11 or a battery core prepared by the method according to claim 12 or 13.

15. A vehicle, comprising the battery core according to any one of claims 1 to 11, or a battery core prepared by the method according to claim 12 or 13, or a starting battery for a fuel engine according to claim 14.
